# EUROPEAN PATENT SPECIFICATION

(11) **EP 2 732 889 B1**
(45) Date of publication and mention of the grant of the patent: **09.01.2019**
(21) Application number: 13192661.0
(22) Date of filing: 13.11.2013
(51) Int. Cl.: B22F 3/105, B29C 67/00

(54) **A machine for making three-dimensional objects from powdered materials**
Maschine zur Herstellung dreidimensionaler Objekte aus pulverförmigen Materialien
Machine de fabrication d'objets tridimensionnels à partir de matériaux en poudre

(30) Priority: 20.11.2012 IT VR20120230
(43) Date of publication of application: 21.05.2014
(73) Proprietor: Trumpf Sisma S.r.l., 36013 Piovene di Rocchette (VI) (IT)
(72) Inventor: MICHELETTO, Dino, Quinto Vicentino (Vicenza) (IT)
(74) Representative: Lissandrini, Marco

(56) References cited:
- EP-A1- 1 234 625
- EP-A1- 1 439 050
- EP-A1- 1 925 433
- EP-A1- 2 286 982
- EP-B1- 0 946 325
- DE-A1- 4 325 573
- DE-A1-102005 016 940
- DE-B3-102006 056 422

## Description

This invention relates to a machine for making three-dimensional objects from powdered materials. In particular, this invention belongs to the industrial sector of laser sintering of powdered materials for creating three-dimensional objects.

As is known, the sintering process consists of transforming powdered material into a solid end product, by means of a thermal treatment carried out by irradiating the powder with a laser beam for a predetermined period of time, until the granules of powder have fused together.

Laser sintering is used in many industrial sectors for making objects, even with complex shapes, in a rapid way, more economical than normal metal fusion processes. Laser sintering is applied in particular in the sector of jewellery and dental prostheses, as well as in the technical field of prototype production.

It is known that a machine for laser sintering of powdered materials comprises the following mechanical parts:
- a working surface in which a growing cavity is made;
- a platform for growing the end product, slidably inserted in the growing cavity and movable between a plurality of different positions;
- means for feeding the powdered materials to a part of the working surface;
- a trowel movable along the working surface and preferably in contact with it for bringing the powdered materials onto the growing platform in such a way as to distribute a thin layer of powder on the growing platform;
- a laser focused on the zones covered by the layer of powder, until the granules of powder have fused together.

According to the prior art, document EP946325 describes a method for making an object by depositing, one after another, layers of powdered materials on a growing platform. In particular, the method comprises depositing a first layer of powder on the growing platform and focusing a laser beam on predetermines zones of said layer, until a temperature is reached which is suitable for causing the granules of powder to fuse together, before depositing the next layer.

Precisely, the sintering process is normally carried out as follows:
- lowering of the growing platform relative to the working surface;
- passage of the trowel in contact (or at a predetermined distance from) with the working surface from an initial position to a final position for bringing the powdered materials onto the growing platform (in detail, the space present between the growing platform and the working surface is filled in such a way as to achieve levelling of the layer of powder with the working surface);
- return of the trowel from the final position to the initial position;
- passage with the laser over the zones covered by the layer of powder;
- repetition of lowering of the platform, passage of the trowel, filling, return of the trowel and passage of the laser until a three-dimensional object has been formed.

However, this first prior art technique has several disadvantages.

In fact, as indicated above, the sintering method comprises a trowel return movement from the final position to the initial position which affects the layer of powdered materials just deposited on the platform. In other words, since the layer of powdered materials is level with the working surface and since the trowel operates in contact with or at a predetermined distance from the working surface, it is clear that the return of the trowel may again mean contact with the layer of powdered materials just deposited. Therefore, the return of the trowel may disarrange the layer of powdered materials deposited.

To solve that problem, a second technique is also used, which involves lowering the growing platform on which the layer of powdered materials to be sintered has been deposited before making the trowel return from the final position to the initial position. After the return of the trowel, the growing platform is brought back into the previous position, then the passage of the laser begins for sintering.

In that way, during the return of the trowel, the layer of powdered materials just deposited is no longer level with the working surface thanks to the further lowering of the growing platform. Therefore, the return passage of the trowel does not affect the layer of powdered materials already deposited, since there is no contact between them.

However, this second prior art technique also has disadvantages.

In particular, the main disadvantage is linked to the fact that a plurality of movements of the growing platform in the growing cavity is required. In particular, each time a layer of powder is deposited the growing platform must be lowered and then raised again.

Such operations create continuous stresses on the growing platform movement mechanisms and further complicate the control unit designed to control the growing platform.

Moreover, platform lowering and then raising again could result in inaccuracy in terms of returning to the starting position. Therefore, there could be consequent inaccuracies in the production of the object to be made, since the sintering process requires maximum micrometric precision.

In this situation, the aim of this invention is to provide a machine which overcomes the above-mentioned disadvantages.

In particular, the aim of this invention is to provide a machine which allows the layer of powder deposited on the growing platform to be kept unchanged before the passage with the laser in a simple way compared with the prior art.

It is also the aim of this invention to provide a machine which allows the avoidance of continuous stresses on the growing platform movement mechanisms.

It is also the aim of this invention to provide a machine which allows improvement of the precision of the production of three-dimensional objects in a simple way compared with the prior art.

The aims indicated are substantially achieved by a machine for making three-dimensional objects from powdered materials as described in the appended claims.

Further features and the advantages of this invention are more apparent from the detailed description which follows of a preferred but non-limiting embodiment of a machine for making three-dimensional objects from powdered materials as illustrated in the accompanying drawings, in which:
- Figure 1 is an axonometric view of a machine according to this invention with some parts removed to better illustrate others;
- Figure 2 is a schematic front view of a detail of the machine of Figure 1 in a first operating step;
- Figure 3 is a schematic front view of the detail of Figure 2 of the machine in a second operating step after the first;
- Figure 4 is a schematic front view of the detail of Figure 2 of the machine in a third operating step after the second; and
- Figure 5 is a schematic front view of the detail of Figure 2 of the machine in a fourth operating step after the third.

With reference to the accompanying drawings, the numeral 1 denotes in its entirety a machine for making three-dimensional objects from powdered materials in accordance with this invention.

In particular, the machine comprises a supporting frame 2 on which a main body 3 is mounted.

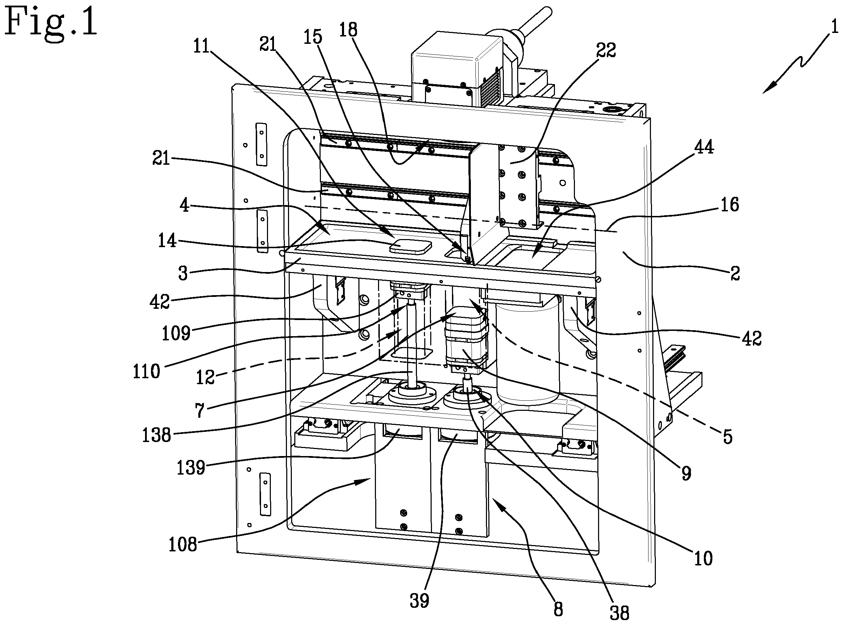

Figure 1 shows how the supporting frame 2 forms a recess in which the main body 3 is mounted.

The main body 3 comprises a working surface 4 in which cavities are made. Preferably, the working surface 4 is at least mainly flat so as to favour the movement of the powdered materials from one cavity to another. Even more preferably, the working surface 4 extends horizontally. Precisely, the main body 3 comprises a growing cavity 5 extending along a main direction of extension 6. In the preferred embodiment illustrated in the accompanying drawings, the main direction of extension 6 is transversal, preferably orthogonal, to the working surface 4.

Advantageously, the growing cavity 5 forms, inside it, a growing space in which the three-dimensional object to be made is produced.

It should be noticed that the growing cavity 5 is open at the working surface in such a way as to allow the insertion of the powdered materials in the growing cavity 5. Precisely, the growing cavity 5 has its inlet positioned at the working surface.

In particular, the machine 1 comprises a growing platform 7 for growing the object to be produced, slidably inserted in the growing cavity 5 of the main body 3 and movable along the main direction of extension 6 between a plurality of operating positions. In other words, the area between the growing platform 7 and the working surface 4 is defined as the growing space. In other words, the growing space is variable during use of the machine 1 depending on the movements of the growing platform 7.

It should be noticed that, during use, the growing cavity 7 is movable away from the working surface 4 between a plurality of different positions gradually as the object is made.

The machine 1 also comprises feeding means 11 operatively associated with the working surface 4 for feeding the powdered materials to it.

In particular, as can be seen in the accompanying drawings, the feeding means 11 comprise a containment cavity 12 for the powdered materials which is made in the main body 3. It is now clear that the two cavities initially mentioned are the growing cavity 5 and the containment cavity 12. Preferably, the containment cavity 12 extends along a principal direction of extension 13. Said principal direction of extension 13 is substantially parallel with the main direction of extension 6. In other words, the growing cavity 5 and the containment cavity 12 are made one after another along the working surface 4. Precisely, the growing cavity 5 and the growing cavity 5 are positioned one after another along the working surface 4 according to a working route 16 transversal to the principal direction of extension 13. In the preferred embodiment, the containment cavity 12 and the growing cavity 5 are positioned one after another along the working surface 4 according to a working route 16 perpendicular to the principal direction of extension 13.

Moreover, the feeding means 11 comprise a containment platform 14 for containing the powdered materials, slidably inserted in the containment cavity 12 of the main body 3 and movable between a plurality of operating positions. In particular, during use, the containment platform 14 is movable towards the working surface 4 for bringing the powdered materials towards it.

Even more particularly, the containment platform 14 is movable parallel with the main direction of extension 6 between a plurality of operating positions.

Advantageously, the containment cavity 12 forms a containment space in which the powdered materials to be sintered are stored.

In other words, the containment space is the area between the containment platform 14 and the working surface 4. In yet other words, the containment space is variable during use of the machine 1 depending on the movements of the containment platform 14.

In use, during operation of the machine 1, the containment platform 14 moves towards the working surface 4, whilst the growing platform 7 moves away from the working surface 4. In other words, during operation of the machine 1, the containment space is reduced whilst the growing space is increased.

Moreover, the machine 1 comprises movement means 8 suitably connected to the growing platform 7 for moving it.

In particular, the movement means 8 comprise a supporting portion 9 extending inside the growing cavity 5. The growing platform 7 is fixed to the supporting portion 9 for moving the growing platform 7.

In addition, the movement means 8 comprise release means 10 interposed between the supporting portion 9 and the rest of the movement means 8.

Moreover, the movement means 8 comprise a worm screw 38 extending between a relative first portion operatively connected to the growing platform 7 by means of the supporting portion 9, and a relative second portion operatively engaged with a gear wheel. The gear wheel is connected to an electric motor 39 (which is also part of the movement means 8) for moving the worm screw 38.

Similarly, the feeding means 11 comprise movement means 108 for moving the containment platform 14.

In particular, the movement means 108 of the containment platform 14 comprise a supporting portion 109 extending inside the containment cavity 12 and release means 110 interposed between the supporting portion 109 and the rest of the movement means 108 for releasing the supporting portion 109 relative to the movement means 108. The containment platform 14 is fixed to the supporting portion 109 for moving the containment platform 14.

Moreover, the movement means 108 comprise a worm screw 138 extending between a relative first portion operatively connected to the containment platform 14 and a relative second portion operatively engaged with a gear wheel. The gear wheel is connected to an electric motor 139 (which is also part of the movement means 108) for moving the worm screw 138.

In addition, the machine 1 comprises an applicator unit 15 movable along the working surface 4 in a forward direction 19 in which it is positioned in a lowered position on the working surface 4 according to a direction going away from the working surface 4 for bringing the powdered materials from the feeding means 11 to the growing cavity 5.

Preferably, the applicator unit 15 in the lowered position is positioned in contact with the working surface 4 for bringing the powdered materials from the feeding means 11 to the growing cavity 5.

Alternatively, the applicator unit 15 is positioned at a first distance from the working surface 4 for bringing the powdered materials from the feeding means 11 to the growing cavity 5 in such a way as to create a layer of powdered materials on top of the working surface 4, where said layer has a thickness equal to the first distance.

In other words, the applicator unit 15 may be positioned, during the movement along the forward direction 19, at a distance equal to zero relative to the working surface 4 (in that case the applicator unit 15 is positioned in contact with the working surface 4) or at the first distance which is greater than zero. In yet other words, the first distance is greater than zero.

Preferably, the applicator unit 15 is a trowel which drags the powdered materials from the feeding means 11 to the growing cavity 5.

In particular, the applicator unit 15 is movable from the containment cavity 12 to the growing cavity 5, along a forward direction 19 transversal to the main direction of extension 6, for transferring the powdered materials from the containment cavity 12 to the growing cavity 5. Preferably, the forward direction 19 is perpendicular to the main direction of extension 6.

As is explained in more detail below, the forward direction 19 is part of the working route 16. In other words, the working route 16 is defined by a forward direction 19 and a return direction 20 superposed on and coinciding with the forward direction. In the preferred embodiment, the working route 16 is a straight line along which the applicator unit 15 moves. In yet other words, the forward direction 19 and the return direction 20 define the directions of travel of the applicator unit 15 along the working route 16.

Furthermore, as can be seen in Figure 1, the applicator unit 15 extends on the working surface 4 and covers the entire width of the two cavities measured perpendicularly to the forward direction 19 of the applicator unit 15. Preferably, the applicator unit 15 extends beyond the entire width of each of the two cavities measured perpendicularly to the forward direction 19 of the applicator unit 15. Moreover, the applicator unit 15 comprises a flexible portion 17 in contact with or at the first distance from the working surface 4. In an alternative embodiment, the flexible portion 17 is interchangeable.

During operation of the machine 1, the containment platform 14 moves towards the working surface 4 in such a way as to raise above the working surface 4 a predetermined quantity of powdered materials. Then, the passage of the applicator unit 15 transfers the powdered materials into the growing cavity 5.

In particular, the machine 1 comprises a sliding lane 21 spaced from the working surface 4 and a carriage 22 slidably mounted on the lane 21, on which the applicator unit 15 is mounted. Precisely, the accompanying drawings show how the sliding lane 21 is fixed to the supporting frame 2 and extends mainly along a direction of extension substantially parallel with the working surface 4. The applicator unit 15 is connected to the carriage 22 in such a way that it can move along the forward direction 19 and the return direction 20.

Moreover, the machine 1 comprises an electromagnetic radiation device 18 operatively associated with the growing platform 7 and designed for focusing a beam of electromagnetic radiation on predetermined zones of each layer of deposited powder until joining together of the granules of powdered materials is achieved. In particular, the electromagnetic radiation device 18 is connected to the supporting frame 2 of the machine 1 and is facing the growing cavity 5. Precisely, the electromagnetic radiation device 18 is facing the growing cavity 5 on the working surface 4 side. Moreover, the electromagnetic radiation device 18 is spaced from the growing cavity 5 in a direction defined by the continuation of the main direction of extension 6 above the working surface 4. Said electromagnetic radiation device 18 comprises a focusing system using lenses for improving the directing and concentration of the laser beam on the layers of powdered materials.

Preferably, the electromagnetic radiation device 18 is a laser device.

The electromagnetic radiation device 18 is not described in more detail below, since it is of the type known in the sector.

In accordance with this invention, the machine 1 comprises spacing means 23 for spacing the applicator unit 15 acting on it for spacing it from the working surface 4 during a return direction 20 of the applicator unit 15 opposite to the forward direction 19. In particular, the spacing means 23 are designed to bring the applicator unit into a raised position relative to the working surface 4 and spaced from the lowered position according to the direction going away from the working surface 4. Said applicator unit 15 is positioned in the raised position during the return direction 20. Preferably, during the raised position the applicator unit 15 is spaced from the working surface 4 by a predetermined distance.

Alternatively, if the applicator unit 15 is positioned at the first distance from the working surface 4 during the lowered position, the spacing means 23 of the applicator unit 15 act on it to bring it to a second distance from the working surface 4 which is greater than the first distance. In particular, the applicator unit 15 is positioned at the second distance from the working surface 4 during the movement along the return direction 20 of the applicator unit 15 opposite to the forward direction 19.

In other words, the applicator unit 15 is movable along a forward direction 19 for bringing the powdered materials into the growing cavity 5 and is movable along a return direction 20 for returning to the feeding means 11. It should be noticed that the applicator unit 15 remains in the raised position at least during the part of the return route which is over the growing platform 7. Preferably, the applicator unit 15 remains in the raised position during the entire return route of the applicator unit 15

Precisely, the applicator unit 15 is movable from an initial position 24 located at the feeding means 11 to a final position 25 located beyond the growing cavity 5 in the forward direction 19. Moreover, the applicator unit 15 is movable from the final position 25 to the initial position 24 in the return direction 20.

In particular, the spacing means 23 are activated when the applicator unit 15 reaches the final position 25 in such a way as to avoid altering the layers of powdered materials deposited on the growing platform 7 during the return of the applicator unit 15.

In detail, the machine comprises a control unit (not illustrated in the accompanying drawings) connected to the applicator unit 15 and designed for:
- moving the applicator unit 15 along the forward direction 19;
- activating the spacing means 23 for spacing the applicator unit 15 from the working surface 4;
- moving the applicator unit 15 along the return direction 20.

Said control unit is designed to carry out the operations just listed one after another in terms of time.

Moreover, the control unit is designed to activate the electromagnetic radiation device after the movement of the applicator unit 15 along the return direction 20.

In particular, the spacing means 23 comprise a supporting unit 26 which is at least partly movable relative to the working surface 4 and extends transversely relative to the working surface 4 between a relative first end 26a and a relative second end 26b opposite to the first end 26a and closer to the working surface 4 than the first end 26a. The applicator unit 15 is connected to the supporting unit 26 at the second end 26b. Moreover, the spacing means 23 comprise locking means 27 acting on the supporting unit 26 for locking it between a raised position in which the applicator unit 15 is spaced from the working surface 4 or positioned at the second distance from it, and a lowered position in which the applicator unit 15 is in contact with or at the first distance from the working surface 4. Preferably, the locking means 27 are of the mechanical type.

Preferably, the supporting unit 26 is movable rotatably relative to an axis of rotation passing through the first end 26a and substantially parallel with the working surface 4 in such a way that the supporting unit 26 defines a pendulum movement relative to the working surface 4 for moving the second end 26b of the supporting unit 26 away from or towards said working surface 4. In detail, said axis of rotation is substantially perpendicular to the forward direction 19 and to the return direction 20.

In other words, the second end 26b of the supporting unit 26 is movable according to an oscillating movement about the axis of rotation. In that way, when the supporting unit 26 is oriented orthogonally relative to the working surface 4 the second end 26b is closer to the working surface 4 (and the applicator unit 15 is in contact with or at the first distance from the working surface 4), whilst when the supporting unit 26 is oriented along a direction set at an angle to the working surface 4 the second end 26b is further from the working surface 4 (and the applicator unit 15 is spaced from the working surface 4 or positioned at the second distance).

Moreover, the locking means 27 comprise a lever 28 extending between a relative first end 28a rotatably connected to the supporting unit 26 and a relative second end 28b opposite to the first end. In particular, the lever 28 is movable between a first position for locking the supporting unit 26 in the raised position and a second position for locking the supporting unit 26 in the lowered position.

In addition, the locking means 27 comprise first stop means 29 for the lever 28 operatively associated with the second end 28b of the lever 28 for locking it in the first position and second stop means 30 for the lever 28 operatively associated with the second end 28b of the lever 28 for locking it in the second position.

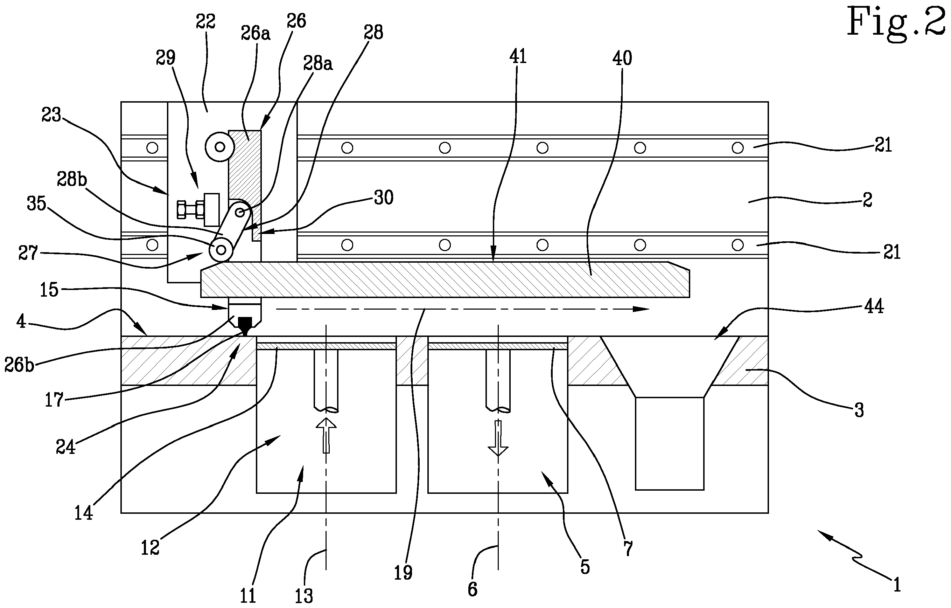

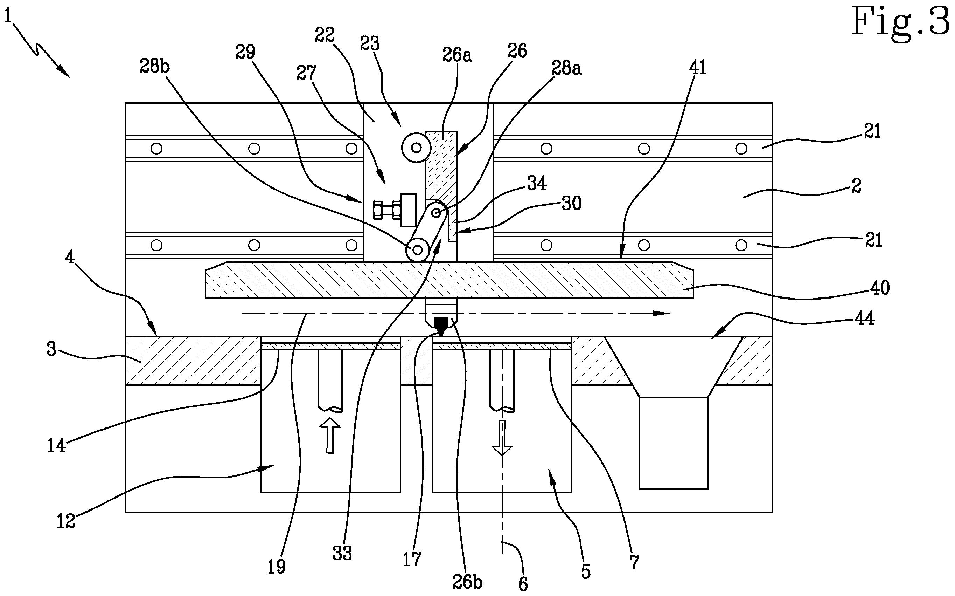

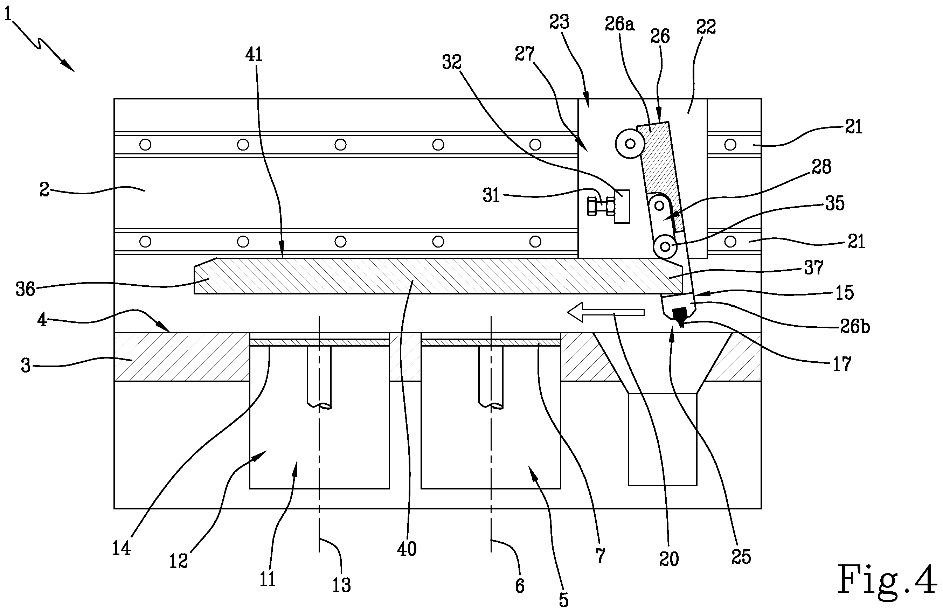

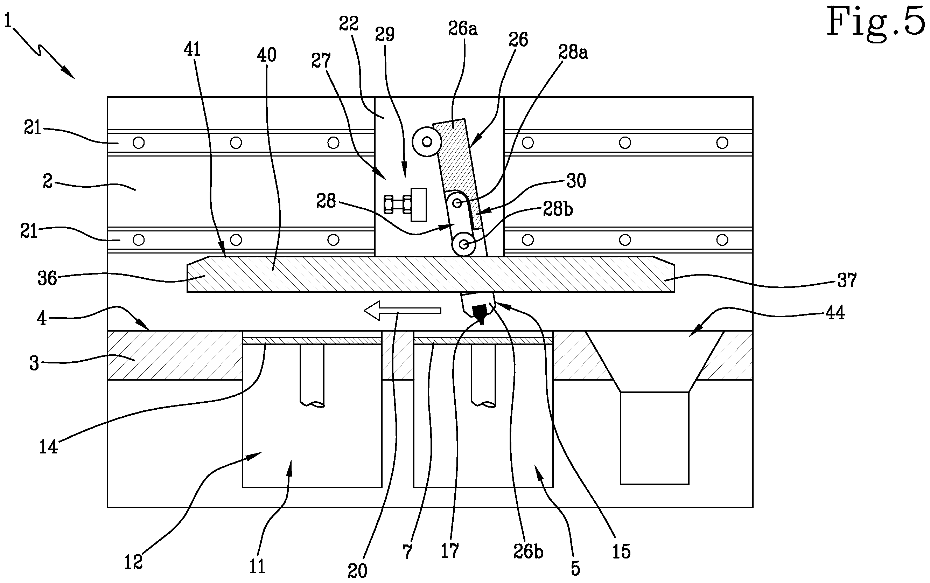

In particular, the first stop means 29 are adjustable in such a way as to adjust the lowered position of the applicator unit 15 relative to the working surface 4. Precisely, the first stop means 29 comprise an adjusting unit 31 and a movable plate 32. The adjusting unit 31 is connected to the carriage 22 and allows adjustment of the distance between the supporting unit 26 and the plate 32. As shown in Figures 2 to 5, the first stop means 29 are spaced from the supporting unit 26 in the return direction 20.

Moreover, the second stop means 30 are formed by an inlet 33 made in the supporting unit 26 between the first end 26a and the second end 26b. Said second stop means 30 comprise a contact element 34 fixed to the supporting unit 26 delimiting the inlet in the supporting unit 26. When the lever 28 is resting on the contact element, it is in the first position and the supporting unit 26 is in the raised position.

In use, the lever 28 abuts the first stop means 29 during the second position, and abuts the second stop means 30 during the first position.

Moreover, the spacing means 23 comprise a cam unit 40 spaced from the working surface 4 and forming a sliding plane 41. In addition, the lever 28 comprises a sliding unit 35 connected to the second end 28b and positioned in sliding contact with the sliding plane 41 in such a way as to change the position of the lever 28 from the first position to the second position and vice versa.

Preferably, the cam unit 40 extends substantially parallel with the working surface 4. In other words, the sliding plane 41 is substantially parallel with the working surface 4.

In use, the cam unit 40 extends along the forward direction 19 between a relative initial end 36 and a relative final end 37. The initial end 36 is positioned close to the feeding means 11. Precisely, the initial end 36 is positioned upstream of the containment cavity 12 in the forward direction 19. Moreover, the final end 37 is positioned downstream of the growing cavity 5 in the forward direction 19.

It should be noticed that the initial end 36 and the final end 37 have a chamfer from the sliding plane 41 towards the working surface 4 in such a way as to favour the change of position of the lever 28 from the first position to the second position and vice versa.

In fact, when the lever 28 reaches the final end 37, the sliding unit 35 tends to descend along the chamfer. In that moment the change of movement of the applicator unit 15 from the forward direction 19 to the return direction 20 causes a movement of the lever 28 (thanks to the presence of the sliding unit 35) from the second position to the first position in such a way as to angle the supporting unit 26. Said angling of the supporting unit 26 causes the applicator unit 15 to be spaced from the working surface 4.

In other words, the combination of the presence of the chamfer and the inversion of the movement of the applicator unit 15 from the forward direction 19 to the return direction 20 cause the applicator unit 15 to be spaced from the working surface 4.

In the same way, when the lever 28 reaches the initial end 36, the sliding unit 35 tends to descend along the chamfer. In that moment the change of movement of the applicator unit 15 from the return direction 20 to the forward direction 19 causes a movement of the lever 28 (thanks to the presence of the sliding unit 35) from the first position to the second position in such a way as to angle the supporting unit 26 orthogonally to the working surface 4. Said return of the supporting unit 26 to a position orthogonal to the working surface 4, causes the applicator unit 15 to be moved towards (and preferably into contact with) the working surface 4.

In other words, the combination of the presence of the chamfer and the inversion of the movement of the applicator unit 15 from the return direction 20 to the forward direction 19 cause the applicator unit 15 to be spaced from the working surface 4.

It should be noticed that at least part of the spacing means 23 are mounted on the carriage 22. In particular, the supporting unit 26 and the locking means 27 are mounted on the carriage 22 and are movable with it along the working route 16.

Moreover, the machine 1 comprises a collection cavity 44 for collecting the powdered materials which is made in the working surface 4 and positioned after the containment cavity 12 and the growing cavity 5 in the forward direction 19 for collecting the remnants of powdered materials. In fact, during the movement of the applicator unit 15 beyond the growing cavity 5 in the forward direction 19, the powdered materials conveyed by the applicator unit 15 and not poured into the growing chamber are collected in the collection cavity 44. Advantageously, the collection cavity 44 comprises a mouth whose width is equal to the width of the applicator unit (measured orthogonally to the forward direction 19) in such a way that it can collect the largest possible quantity of powdered materials. The collection cavity 44 is not described in more detail below, since it is of the type known in the sector of sintering machines.

Moreover, the main body 3 of the machine 1 is slidable relative to the worm screw 38 and to the motor in a direction perpendicular to the main direction of extension 6. In particular, the main body 3 is movable between an operating condition in which it is positioned close to a motor-driven part of the movement means 8 and a home condition in which it is spaced from the motor-driven part of the movement means 8. Preferably, said motor-driven part of the movement means 8 comprises the worm screw 38 and the electric motor 39.

Figure 1 shows how the supporting structure 2 comprises two supports 42 on which the main body 3 is slidably mounted.

For the same reason, the main body 3 of the machine 1 is slidable relative to the worm screw 138 and to the motor 139 in a direction perpendicular to the principal direction of extension 13. Again in this case, before moving the main body 3 from the operating condition to the home condition, the supporting portion 109 must be released from the rest of the movement means 108 using the release means 110.

In use, observing the machine 1 from the front, the main direction of extension 6 of the growing cavity 5 extends substantially vertically and the working surface 4 is substantially horizontal. In that viewpoint, the electromagnetic radiation device 18 is positioned above the main body 3 and the movement means 8 are positioned below the main body 3. In other words, the movement means 8, the main body 3 and the electromagnetic radiation device 18 are vertically superposed from the bottom up.

Moreover, the applicator unit 15 is positioned above the working surface 4 but below the electromagnetic radiation device 18.

This invention also relates to a method for making three-dimensional objects from powdered materials, comprising a step of preparing the working surface 4 in which the growing cavity 5 is made and preparing a growing platform 7 for growing the object to be produced, slidably movable inside the growing cavity 5. It should be noticed that the working surface 4, the growing cavity 5 and the growing platform 7 are made as described above.

Moreover, the method comprises a step of feeding the powdered materials to the working surface 4. After the step of feeding the powdered materials, the method comprises moving the applicator unit 15 positioned in contact with the working surface 4 from the initial position 24 to the final position 25 in such a way as to bring the powdered materials from the working surface 4 to the growing platform 7 for depositing at least one layer of powder on the growing platform 7. Alternatively, the applicator unit 15 is positioned at a first distance from the working surface 4.

Precisely, that step is carried out by the containment platform 14 which slides inside the containment cavity 5 in which the powdered materials are stored.

Moreover, the method comprises a step of focusing a beam of electromagnetic radiation on predetermined zones of each layer of deposited powder until joining together of the powder granules is achieved, before depositing a subsequent layer of powder.

According to this invention, after the step of moving the applicator unit 15 for bringing the powdered materials from the working surface 4 to the growing platform 7, there is a step of spacing the applicator unit 15 from the working surface 4 and a subsequent step of the return movement of the applicator unit 15, spaced from the working surface 4, in a direction from the final position 25 to the initial position 24.

It should be noticed that the step of spacing the applicator unit 15 is carried out before the step of focusing the beam of electromagnetic radiation.

In particular, the spacing step comprises bringing the applicator unit 15 from the lowered position on the working surface 4 into the raised position relative to the working surface 4 and spaced from the lowered position according to the direction going away from the working surface 4.

In detail, the spacing step comprises the applicator unit 15 being lifted relative to the working surface in such a way that it loses contact with it or is lifted relative to the first distance, thereby bringing it to a second distance from the working surface 4 which is greater than the first distance.

The subsequent step of the return movement of the applicator unit 15 comprises the latter remaining in the raised position during the return route.

This invention achieves the preset aims.

In fact, the machine keeps unchanged the layer of powder deposited on the growing platform before the passage with the laser in a simple way thanks to the spacing means which allow spacing of the applicator unit during its return step. In that way, the distribution of the layer of powdered materials deposited on the growing platform is not disturbed before said layer is exposed to the laser.

Moreover, the machine which allows the avoidance of continuous stresses on the growing platform movement mechanisms, since the growing platform is not continuously raised and lowered during the movements of the applicator unit. Consequently, the machine allows improved precision in the production of three-dimension objects, since the growing platform remains stationary until the laser sintering is carried out. It should also be noticed that this invention is relatively easy to produce and that even the cost connected with implementing the invention is not very high.

## Claims

1. A machine (1) for making three-dimensional objects from powdered materials, comprising:
a main body (3) forming a working surface (4);
a growing cavity (5) made in the main body (3) and open at the working surface (4); said machine (1) comprising a growing platform (7) for growing the object to be produced, slidably inserted in the growing cavity (5) and movable at least away from the working surface (4);
feeding means (11) for feeding the powdered materials operatively associated with the working surface (4) for feeding said powdered materials to the working surface (4);
an applicator unit (15) movable along the working surface (4) in a forward direction (19) in which it is in a lowered position on the working surface (4) according to a direction going away from the working surface (4) for bringing the powdered materials from the feeding means (11) to the growing cavity (5);
an electromagnetic radiation device (18) designed for focusing a beam of electromagnetic radiation on predetermined zones of each layer of powdered materials deposited on the growing platform (7) until joining together of the granules of powdered materials is achieved;
means (23) for spacing the applicator unit (15) acting on it for bringing it into a raised position relative to the working surface (4) and spaced from the lowered position according to the direction going away from the working surface (4); said applicator unit (15) being positioned in the raised position during a return direction (20) of the applicator unit (15) which is opposite to the forward direction (19);
**characterised in that** the spacing means (23) comprise a supporting unit (26) at least partly movable relative to the working surface (4) and extending transversely to the working surface (4) between a relative first end (26a) and a relative second end (26b) which is opposite to the first and closer to the working surface (4) than the first end (26a); said applicator unit (15) being connected to the supporting unit (26) at the second end (26b); said spacing means (23) comprising locking means (27) acting on the supporting unit (26) for locking it between a raised position in which the applicator unit (15) is spaced from the working surface (4) and a lowered position in which the applicator unit (15) is in contact with or positioned at a first distance from the working surface (4).

2. The machine (1) according to claim 1, **characterised in that** during the lowered position the applicator unit (15) is positioned in contact with the working surface (4); during the raised position the applicator unit (15) being spaced from the working surface (4) by a predetermined distance.

3. The machine (1) according to claim 1, **characterised in that** during the lowered position the applicator unit (15) is positioned at a first distance from the working surface (4); during the raised position the applicator unit (15) being positioned at a second distance from the working surface (4) which is greater than the first distance.

4. The machine (1) according to any of the preceding claims, **characterised in that** the supporting unit (26) is movable rotatably relative to an axis of rotation passing through the first end (26a) and substantially parallel with the working surface (4) in such a way as to define a pendulum movement relative to the working surface (4) for moving the second end (26b) of the supporting unit (26) away from or towards said working surface (4).

5. The machine (1) according to claim 4, **characterised in that** the locking means (27) comprise a lever (28) extending between a relative first end (28a) rotatably connected to the supporting unit (26) and a relative second end (28b) opposite the first end; said lever (28) being movable between a first position for locking the supporting unit (26) in the raised position and a second position for locking the supporting unit (26) in the lowered position.

6. The machine (1) according to claim 5, **characterised in that** the locking means (27) comprise first stop means (29) for the lever (28) operatively associated with the second end (28b) of the lever (28) for locking it in the first position and second stop means (30) for the lever (28) operatively associated with the second end (28b) of the lever (28) for locking it in the second position.

7. The machine (1) according to claim 6, **characterised in that** the first stop means (29) are adjustable in such a way as to adjust the lowered position of the applicator unit (15) relative to the working surface (4).

8. The machine (1) according to claim 6 or 7, **characterised in that** the spacing means (23) comprise a cam unit (40) spaced from the working surface (4) and forming a sliding plane (41); said lever (28) comprising a sliding unit (35) connected to the second end (26b) and positioned in sliding contact with the sliding plane (41) in such a way as to change the position of the lever (28) from the first position to the second position and vice versa.

9. The machine (1) according to claim 8, **characterised in that** the cam unit (40) extends along the forward direction (19) between a relative initial end (36) and a relative final end (37); said initial end (36) and said final end (37) having a chamfer from the sliding plane (41) towards the working surface (4) in such a way as to favour the change of position of the lever (28) from the first position to the second position and vice versa.

10. The machine (1) according to any one of the preceding claims, **characterised in that** it comprises a supporting frame (2) on which the main body (3) is mounted; said machine (1) comprising a sliding lane (21) spaced from the working surface (4) and a carriage (22) slidably mounted on the lane; at least part of said spacing means (23) being mounted on the carriage (22).

11. The machine (1) according to any one of the preceding claims, **characterised in that** the feeding means (11) comprise a containment cavity (12) in which the powdered materials are stored and a containment platform (14) slidably mounted in the containment cavity (12); said containment platform (14) being movable at least towards the working surface (4) for bringing the powdered materials to the working surface (4).

12. The machine (1) according to any one of the preceding claims, **characterised in that** it comprises a control unit operatively connected to the applicator unit (15) and designed for:
- moving the applicator unit (15) along the forward direction (19);
- activating the spacing means (23) for spacing the applicator unit (15) from the working surface (4);
- moving the applicator unit (15) along the return direction (20).

13. A method for making three-dimensional objects from powdered materials, comprising the following operating steps:
- preparing a working surface (4) in which a growing cavity (5) is made and preparing a growing platform (7) for growing the object to be produced, slidably movable inside the growing cavity (5);
- feeding the powdered materials to the working surface (4);
- moving an applicator unit (15) from an initial position to a final position in such a way as to bring the powdered materials from the working surface (4) to the growing platform (7) for depositing at least one layer of powder on the growing platform (7);
- focusing a beam of electromagnetic radiation on predetermined zones of each layer of deposited powder until joining together of the powder granules is achieved, before depositing a subsequent layer of powder,
after the step of moving the applicator unit (15) for bringing the powdered materials from the working surface (4) to the growing platform (7) there is a step of spacing the applicator unit (15) from the working surface (4) for bringing the applicator unit (15) from a lowered position on the working surface (4) to a raised position relative to the working surface (4) and spaced from the lowered position according to a direction going away from the working surface (4); the step of spacing the applicator unit (15) being carried out before the step of focusing the beam of electromagnetic radiation;
- a return movement of the applicator unit (15), positioned in the raised position, in a direction from the final position to the initial position; said step of the return movement of the applicator unit (15) comprises the latter remaining in the raised position during the return route;
**characterised in that** the step of spacing the applicator unit (15) from the working surface (4) is performed through spacing means (23) comprising a supporting unit (26) at least partly movable relative to the working surface (4) and extending transversely to the working surface (4) between a relative first end (26a) and a relative second end (26b) which is opposite to the first and closer to the working surface (4) than the first end (26a); said applicator unit (15) being connected to the supporting unit (26) at the second end (26b);
the step of maintaining the applicator unit (15) in the raised position during the return route being performed by locking means (27) acting on the supporting unit (26) for locking it between the raised position in which the applicator unit (15) is spaced from the working surface (4), and the lowered position in which the applicator unit (15) is in contact with or positioned at a first distance from the working surface (4).

## Patentansprüche

1. Maschine (1) zur Herstellung dreidimensionaler Objekten aus pulverförmigen Materialien, umfassend:
einen Hauptkörper (3), der eine Arbeitsfläche (4) bildet;
einen im Hauptkörper (3) ausgebildeten und an der Arbeitsfläche (4) offenen Wachstumshohlraum (5); wobei die Maschine (1) eine Wachstumsplattform (7) umfasst, damit das zu erzeugende Objekt wächst, die verschiebbar in den Wachstumshohlraum (5) eingesetzt und zumindest von der Arbeitsfläche (4) wegführend beweglich ist;
Zuführmittel (11) zum Zuführen von pulverförmigen Materialien, die mit der Arbeitsfläche (4) betriebswirksam assoziert sind, um der Arbeitsfläche (4) die pulverförmigen Materialien zuzuführen;
eine Auftragseinheit (15), die entlang der Arbeitsfläche (4) in einer Vorwärtsrichtung (19) beweglich ist, in der sie sich in einer abgesenkten Position auf der Arbeitsfläche (4) nach einer von der Arbeitsfläche (4) wegführenden Richtung befindet, um die pulverförmigen Materialien von den Zuführmitteln (11) zu den Wachstumshohlraum (5) zu bringen;
eine elektromagnetische Strahlungsvorrichtung (18), die ausgelegt ist, einen Strahl elektromagnetischer Strahlung auf vorbestimmte Zonen jeder Schicht aus pulverförmigen Materialien, die auf der Wachstumsplattform (7) abgeschieden werden, zu fokussieren, bis das Zusammenfügen der Granulate aus pulverförmigen Materialien erreicht wird;
Mittel (23) zum Beabstanden der auf sie einwirkenden Auftragseinheit (15), um sie in eine angehobene Position relativ zur Arbeitsfläche (4) und von der abgesenkten Position nach der von der Arbeitsfläche (4) wegführenden Richtung beabstandet zu bringen; wobei die Auftragseinheit (15) in der angehobenen Position während einer Rücklaufrichtung (20) der Auftragseinheit (15) positioniert wird, die der Vorwärtsrichtung (19) entgegengesetzt ist;
**dadurch gekennzeichnet, dass** die Abstandsmittel (23) eine Stützeinheit (26) umfassen, die zumindest teilweise relativ zur Arbeitsfläche (4) beweglich ist und sich quer zur Arbeitsfläche (4) zwischen einem relativen ersten Ende (26a) und einem relativen zweiten Ende (26b) erstreckt, das dem ersten gegenüberliegt und näher an der Arbeitsfläche (4) als das erste Ende (26a) liegt; wobei die Auftragseinheit (15) mit der Stützeinheit (26) am zweiten Ende (26b) verbunden ist;
wobei die Abstandsmittel (23) Verriegelungsmittel (27) umfassen, die auf die Stützeinheit (26) wirken, um sie zwischen einer angehobenen Position, in der die Auftragseinheit (15) von der Arbeitsfläche (4) beabstandet ist, und einer abgesenkten Position, in der die Auftragseinheit (15) in Kontakt mit oder in einem ersten Abstand von der Arbeitsfläche (4) positioniert ist, zu verriegeln.

2. Maschine (1) nach Anspruch 1, **dadurch gekennzeichnet, dass** die Auftragseinheit (15) während der abgesenkten Position in Kontakt mit der Arbeitsfläche (4) positioniert ist; wobei die Auftragseinheit (15) während der angehobenen Position um einen vorbestimmten Abstand von der Arbeitsfläche (4) beabstandet ist.

3. Maschine (1) nach Anspruch 1, **dadurch gekennzeichnet, dass** die Auftragseinheit (15) während der abgesenkten Position in einem ersten Abstand von der Arbeitsfläche (4) positioniert ist; wobei die Auftragseinheit (15) während der angehobenen Position in einem zweiten Abstand von der Arbeitsfläche (4) positioniert ist, der größer als der erste Abstand ist.

4. Maschine (1) nach einem der vorhergehenden Ansprüche, **dadurch gekennzeichnet, dass** die Stützeinheit (26) relativ zu einer Drehachse, die durch das erste Ende (26a) und im Wesentlichen parallel zur Arbeitsfläche (4) verläuft, drehbar beweglich ist, um eine Pendelbewegung relativ zur Arbeitsfläche (4) zu definieren, um das zweite Ende (26b) der Stützeinheit (26) von der Arbeitsfläche (4) wegführend oder zu dieser hinführend zu bewegen.

5. Maschine (1) nach Anspruch 4, **dadurch gekennzeichnet, dass** die Verriegelungsmittel (27) einen Hebel (28) umfassen, der sich zwischen einem relativen ersten Ende (28a), das drehbar mit der Stützeinheit (26) verbunden ist, und einem relativen zweiten Ende (28b) gegenüber dem ersten Ende erstreckt; wobei der Hebel (28) zwischen einer ersten Position zum Verriegeln der Stützeinheit (26) in der angehobenen Position und einer zweiten Position zum Verriegeln der Stützeinheit (26) in der abgesenkten Position beweglich ist.

6. Maschine (1) nach Anspruch 5, **dadurch gekennzeichnet, dass** die Verriegelungsmittel (27) erste Anschlagmittel (29) für den Hebel (28), die mit dem zweiten Ende (28b) des Hebels (28) betriebswirksam assoziert sind, um ihn in der ersten Position zu verriegeln, und zweite Anschlagmittel (30) für den Hebel (28) umfassen, die mit dem zweiten Ende (28b) des Hebels (28) betriebswirksam assoziert sind, um ihn in der zweiten Position zu verriegeln.

7. Maschine (1) nach Anspruch 6, **dadurch gekennzeichnet, dass** die ersten Anschlagmittel (29) so einstellbar sind, dass sie die abgesenkte Position der Auftragseinheit (15) relativ zur Arbeitsfläche (4) einstellen.

8. Maschine (1) nach Anspruch 6 oder 7, **dadurch gekennzeichnet, dass** die Abstandsmittel (23) eine Nockeneinheit (40) umfassen, die von der Arbeitsfläche (4) beabstandet ist und eine Gleitebene (41) bildet; wobei der Hebel (28) eine Gleiteinheit (35) umfasst, die mit dem zweiten Ende (26b) verbunden ist und in Gleitkontakt mit der Gleitebene (41) so positioniert ist, dass die Position des Hebels (28) von der ersten Position in die zweite Position und umgekehrt geändert wird.

9. Maschine (1) nach Anspruch 8, **dadurch gekennzeichnet, dass** sich die Nockeneinheit (40) entlang der Vorwärtsrichtung (19) zwischen einem relativen Anfangsende (36) und einem relativen Abschlussende (37) erstreckt; wobei das Anfangsende (36) und das Abschlussende (37) eine Fase von der Gleitebene (41) zur Arbeitsfläche (4) hin aufweisen, um die Positionsänderung des Hebels (28) von der ersten Position in die zweite Position und umgekehrt zu begünstigen.

10. Maschine (1) nach einem der vorhergehenden Ansprüche, **dadurch gekennzeichnet, dass** sie einen Tragrahmen (2) umfasst, auf dem der Hauptkörper (3) montiert ist; wobei die Maschine (1) eine von der Arbeitsfläche (4) beabstandete Gleitbahn (21) und einen Schlitten (22) umfasst, der verschiebbar auf der Bahn montiert ist; wobei zumindest ein Teil der Abstandshalter (23) auf dem Schlitten (22) montiert ist.

11. Maschine (1) nach einem der vorhergehenden Ansprüche, **dadurch gekennzeichnet, dass** die Zuführmittel (11) einen Aufnahmehohlraum (12), in dem die pulverförmigen Materialien gelagert sind, und eine Aufnahmeplattform (14) umfassen, die verschiebbar im Aufnahmehohlraum (12) gelagert ist; wobei die Aufnahmeplattform (14) zumindest in Richtung der Arbeitsfläche (4) beweglich ist, um die pulverförmigen Materialien zur Arbeitsfläche (4) zu bringen.

12. Maschine (1) nach einem der vorhergehenden Ansprüche, **dadurch gekennzeichnet, dass** sie eine Steuereinheit umfasst, die mit der Auftragseinheit (15) betriebswirksam verbunden und ausgelegt ist zum:
Bewegen der Auftragseinheit (15) entlang der Vorwärtsrichtung (19);
Aktivieren der Abstandsmittel (23) zum Beabstanden der Auftragseinheit (15) von der Arbeitsfläche (4);
Bewegen der Auftragseinheit (15) entlang der Rücklaufrichtung (20).

13. Verfahren zur Herstellung dreidimensionaler Objekte aus pulverförmigen Materialien, umfassend die folgenden Bedienungsschritte:
Vorbereiten einer Arbeitsfläche (4), in der ein Wachstumshohlraum (5) hergestellt ist, und Vorbereiten einer Wachstumsplattform (7), damit das zu erzeugende Objekt wächst, das innerhalb des Wachstumshohlraums (5) verschiebbar beweglich ist;
Zuführen der pulverförmigen Materialien zur Arbeitsfläche (4);
Bewegen einer Auftragseinheit (15) von einer Ausgangsposition in eine Endposition, um die pulverförmigen Materialien von der Arbeitsfläche (4) zur Wachstumsplattform (7) zu bringen, damit zumindest eine Pulverschicht auf der Wachstumsplattform (7) abgeschieden wird;
Fokussieren eines Strahls elektromagnetischer Strahlung auf vorbestimmte Bereiche jeder Schicht abgeschiedenen Pulvers, bis das Zusammenfügen der Pulverkörnchen erreicht wird, bevor eine nachfolgende Pulverschicht abgeschieden wird,
nach dem Schritt zum Bewegen der Auftragseinheit (15) zum Bringen der pulverförmigen Materialien von der Arbeitsfläche (4) zur Wachstumsplattform (7) gibt es einen Schritt zum Beabstanden der Auftragseinheit (15) von der Arbeitsfläche (4) zum Bringen der Auftragseinheit (15) von einer abgesenkten Position auf der Arbeitsfläche (4) in eine angehobene Position relativ zur Arbeitsfläche (4) und beabstandet von der abgesenkten Position nach einer von der Arbeitsfläche (4) wegführenden Richtung; wobei der Schritt zum Beabstanden der Auftragseinheit (15) vor dem Schritt zum Fokussieren des Strahls elektromagnetischer Strahlung durchgeführt wird;
eine Rücklaufbewegung der in der angehobenen Position positionierten Auftragseinheit (15) in einer Richtung von der Endposition zur Anfangsposition; wobei der Schritt der Rücklaufbewegung der Auftragseinheit (15) umfasst, dass diese während des Rücklaufwegs in der angehobenen Position verbleibt;
**dadurch gekennzeichnet, dass** der Schritt zum Beabstanden der Auftragseinheit (15) von der Arbeitsfläche (4) durch Abstandsmittel (23) durchgeführt wird, die eine Stützeinheit (26) umfassen,
die zumindest teilweise relativ zur Arbeitsfläche (4) beweglich ist und sich quer zur Arbeitsfläche (4) zwischen einem relativen ersten Ende (26a) und einem relativen zweiten Ende (26b) erstreckt, das dem ersten gegenüberliegt und näher an der Arbeitsfläche (4) als das erste Ende (26a) liegt; wobei die Auftragseinheit (15) mit der Stützeinheit (26) am zweiten Ende (26b) verbunden ist;
den Schritt zum Behalten der Auftragseinheit (15) in der angehobenen Position während des Rücklaufwegs, der durch Verriegelungsmittel (27) durchgeführt wird, die auf die Stützeinheit (26) wirken, um sie zwischen der angehobenen Position, in der die Auftragseinheit (15) von der Arbeitsfläche (4) beabstandet ist, und in der abgesenkten Position, in der die Auftragseinheit (15) in Kontakt mit oder in einem ersten Abstand von der Arbeitsfläche (4) positioniert ist, zu verriegeln.

## Revendications

1. Machine (1) de fabrication d'objets tridimensionnels à partir de matériaux en poudre, comprenant :
un corps principal (3) formant une surface de travail (4) ;
une cavité de croissance (5) réalisée dans le corps principal (3) et ouverte en correspondance de la surface de travail (4) ; ladite machine (1) comprenant une plateforme de croissance (7), pour faire croître l'objet à fabriquer, introduite de façon coulissante dans la cavité de croissance (5) et mobile au moins en s'éloignant de la surface de travail (4) ;
des moyens d'alimentation (11), pour alimenter les matériaux en poudre, fonctionnellement associés à la surface de travail (4) pour alimenter lesdits matériaux en poudre vers la surface de travail (4) ;
un organe applicateur (15) mobile le long de la surface de travail (4) dans une direction vers l'avant (19) dans laquelle il se trouve dans une position abaissée sur la surface de travail (4) selon une direction s'éloignant de la surface de travail (4) pour amener les matériaux en poudre des moyens d'alimentation (11) à la cavité de croissance (5) ;
un dispositif à rayonnement électromagnétique (18) conçu pour focaliser un faisceau de rayonnement électromagnétique sur des zones prédéterminées de chaque couche de matériaux en poudre déposée sur la plateforme de croissance (7) jusqu'à obtenir l'assemblage des granules de matériaux en poudre ;
des moyens (23) pour espacer l'organe applicateur (15) agissant sur celui-ci pour l'amener dans une position surélevée par rapport à la surface de travail (4) et espacée de la position abaissée selon la direction en s'éloignant de la surface de travail (4) ; ledit organe applicateur (15) étant positionné dans la position surélevée pendant une direction de retour (20) de l'organe applicateur (15) étant opposée à la direction vers l'avant (19) ;
**caractérisée en ce que** les moyens d'espacement (23) comprennent une unité de support (26) au moins en partie mobile par rapport à la surface de travail (4) et se prolongeant transversalement à la surface de travail (4) entre une première extrémité (26a) relative et une seconde extrémité (26b) relative étant opposée à la première et plus proche de la surface de travail (4) que la première extrémité (26a) ; ledit organe applicateur (15) étant relié à l'unité de support (26) en correspondance de la seconde extrémité (26b) ; lesdits moyens d'espacement (23) comprenant des moyens de blocage (27) agissant sur l'unité de support (26) pour la bloquer entre une position surélevée dans laquelle l'organe applicateur (15) est espacé de la surface de travail (4) et une position abaissée dans laquelle l'organe applicateur (15) est en contact avec ou positionné à une première distance de la surface de travail (4).

2. Machine (1) selon la revendication 1, **caractérisée en ce que** lors de la position abaissée, l'organe applicateur (15) est positionné en contact avec la surface de travail (4) ; lors de la position surélevée, l'organe applicateur (15) est espacé de la surface de travail (4) selon une distance prédéterminée.

3. Machine (1) selon la revendication 1, **caractérisée en ce que** lors de la position abaissée, l'organe applicateur (15) est positionné à une première distance de la surface de travail (4) ; lors de la position surélevée, l'organe applicateur (15) est positionné à une seconde distance de la surface de travail (4) étant supérieure à la première distance.

4. Machine (1) selon l'une quelconque des revendications précédentes, **caractérisée en ce que** l'unité de support (26) est mobile en rotation par rapport à un axe de rotation passant à travers la première extrémité (26a) et substantiellement parallèle à la surface de travail (4) de manière à définir un mouvement pendulaire par rapport à la surface de travail (4) pour éloigner ou rapprocher la seconde extrémité (26b) de l'unité de support (26) de ladite surface de travail (4).

5. Machine (1) selon la revendication 4, **caractérisée en ce que** les moyens de blocage (27) comprennent un levier (28) se prolongeant entre une première extrémité (28a) relative, reliée en rotation à l'unité de support (26), et une seconde extrémité (28b) relative opposée à la première extrémité ; ledit levier (28) étant mobile entre une première position pour bloquer l'unité de support (26) dans la position surélevée et une seconde position pour bloquer l'unité de support (26) dans la position abaissée.

6. Machine (1) selon la revendication 5, **caractérisée en ce que** les moyens de blocage (27) comprennent des premiers moyens d'arrêt (29) pour le levier (28) fonctionnellement associés à la seconde extrémité (28b) du levier (28) pour le bloquer dans la première position et des seconds moyens d'arrêt (30) pour le levier (28) fonctionnellement associés à la seconde extrémité (28b) du levier (28) pour le bloquer dans la seconde position.

7. Machine (1) selon la revendication 6, **caractérisée en ce que** les premiers moyens d'arrêt (29) sont réglables de manière à régler la position abaissée de l'organe applicateur (15) par rapport à la surface de travail (4).

8. Machine (1) selon la revendication 6 ou 7, **caractérisée en ce que** les moyens d'espacement (23) comprennent un organe à came (40) espacé de la surface de travail (4) et formant un plan coulissant (41) ; ledit levier (28) comprenant un organe coulissant (35) relié à la seconde extrémité (26b) et positionné en contact coulissant avec le plan coulissant (41) de manière à modifier la position du levier (28) de la première position à la seconde position et vice versa.

9. Machine (1) selon la revendication 8, **caractérisée en ce que** l'organe à came (40) se prolonge le long de la direction en avant (19) entre une extrémité initiale (36) relative et une extrémité finale (37) relative ; ladite extrémité initiale (36) et ladite extrémité finale (37) comportant un chanfrein du plan coulissant (41) vers la surface de travail (4) de manière à faciliter la modification de la position du levier (28) de la première position à la seconde position et vice versa.

10. Machine (1) selon l'une quelconque des revendications précédentes, **caractérisée en ce qu'**elle comprend un cadre de support (2) sur lequel est monté le corps principal (3) ; ladite machine (1) comprenant une voie coulissante (21) espacée de la surface de travail (4) et un chariot (22) monté de façon coulissante sur la voie ; une partie au moins desdits moyens d'espacement (23) étant montée sur le chariot (22) .

11. Machine (1) selon l'une quelconque des revendications précédentes, **caractérisée en ce que** les moyens d'alimentation (11) comprennent une cavité de contenance (12) dans laquelle sont placés les matériaux en poudre et une plateforme de contenance (14) montée de façon coulissante dans la cavité de contenance (12) ; ladite plateforme de contenance (14) étant mobile au moins vers la surface de travail (4) pour amener les matériaux en poudre vers la surface de travail (4).

12. Machine (1) selon l'une quelconque des revendications précédentes, **caractérisée en ce qu'**elle comprend une unité de commande fonctionnellement reliée à l'organe applicateur (15) et conçue pour :
déplacer l'organe applicateur (15) le long de la direction vers l'avant (19) ;
activer les moyens d'espacement (23) pour espacer l'organe applicateur (15) de la surface de travail (4) ;
déplacer l'organe applicateur (15) le long de la direction de retour (20).

13. Procédé de fabrication d'objets tridimensionnels à partir de matériaux en poudre, comprenant les étapes opérationnelles suivantes :
préparer une surface de travail (4) dans laquelle est réalisée une cavité de croissance (5) et préparer une plateforme de croissance (7), pour faire croître l'objet à fabriquer, mobile de façon coulissante à l'intérieur de la cavité de croissance (5) ;
alimenter les matériaux en poudre vers la surface de travail (4) ;
déplacer un organe applicateur (15) d'une position initiale à une position finale de manière à amener les matériaux en poudre de la surface de travail (4) à la plateforme de croissance (7) pour déposer au moins une couche de poudre sur la plateforme de croissance (7) ;
focaliser un faisceau de rayonnement électromagnétique sur des zones prédéterminées de chaque couche de poudre déposée jusqu'à obtenir l'assemblage des granules de poudre avant le dépôt d'une couche ultérieure de poudre,
après l'étape consistant à déplacer l'organe applicateur (15) pour amener les matériaux en poudre de la surface de travail (4) à la plateforme de croissance (7) est prévue une étape consistant à espacer l'organe applicateur (15) de la surface de travail (4) pour amener l'organe applicateur (15) d'une position abaissée sur la surface de travail (4) à une position surélevée par rapport à la surface de travail (4) et espacée de la position abaissée selon une direction s'éloignant de la surface de travail (4) ; l'étape consistant à espacer l'organe applicateur (15) étant effectuée avant l'étape consistant à focaliser le faisceau de rayonnement électromagnétique ;
un mouvement de retour de l'organe applicateur (15), positionné dans la position surélevée, dans une direction de la position finale à la position initiale ; ladite étape de mouvement de retour de l'organe applicateur (15) comprend que ce dernier reste dans la position surélevée pendant la course de retour ;
**caractérisé en ce que** l'étape consistant à espacer l'organe applicateur (15) de la surface de travail (4) est réalisée grâce aux moyens d'espacement (23) comprenant une unité de support (26) au moins en partie mobile par rapport à la surface de travail (4) et se prolongeant transversalement à la surface de travail (4) entre une première extrémité (26a) relative et une seconde extrémité (26b) relative étant opposée à la première et plus proche de la surface de travail (4) que la première extrémité (26a) ; ledit organe applicateur (15) étant relié à l'unité de support (26) en correspondance de la seconde extrémité (26b) ;
l'étape consistant à maintenir l'organe applicateur (15) dans la position surélevée pendant la course de retour étant effectuée par des moyens de blocage (27) agissant sur l'unité de support (26) pour la bloquer entre la position surélevée dans laquelle l'organe applicateur (15) est espacé de la surface de travail (4) et la position abaissée dans laquelle l'organe applicateur (15) est en contact avec ou positionné à une première distance de la surface de travail (4).
